# EUROPÄISCHE PATENTSCHRIFT

(11) **EP 2 438 325 B1**
(45) Veröffentlichungstag und Bekanntmachung des Hinweises auf die Patenterteilung: **04.09.2013**
(21) Anmeldenummer: 10720612.0
(22) Anmeldetag: 19.05.2010
(51) Int. Cl.: F16H 57/04

(54) **SCHMIERVORRICHTUNG FÜR EIN PLANETENGETRIEBE**
LUBRICATION DEVICE FOR A PLANETTRANSMISSION
DISPOSITIF DE LUBRIFICATION POUR TRANSMISSION PLANETAIRE

(30) Priorität: 04.06.2009 DE 102009026704
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE); BAUKNECHT, Gert, 88048 Friedrichshafen (DE)
(86) Internationale Anmeldenummer: PCT/EP2010/056904
(87) Internationale Veröffentlichungsnummer: WO 2010/139554

(56) Entgegenhaltungen:
- DE-A1- 19 736 686
- DE-C1- 4 302 844
- US-A- 2 503 497

## Beschreibung

Die Erfindung betrifft eine Schmiervorrichtung für ein Planetengetriebe mit mehreren Planetenradsätzen gemäß dem Oberbegriff des Patentanspruchs 1.

Die Lagerungen und Verzahnungen der Bauteile in Planetenradsätzen von Automatgetrieben benötigen im Betrieb zur Sicherstellung ihrer Funktion und Gewährleistung ihrer vorgesehenen Gebrauchsdauer stets eine zuverlässige Schmierung und Kühlung. Das üblicherweise von einer Hydraulikversorgung eingespeiste Schmiermittel verzweigt sich in der Regel fliehkraftbedingt über eine, Queröffnungen aufweisende, zentrale Hohlwelle des Planetengetriebes in Richtung zu den Planetenradsätzen. Die Schmier- und Kühlölzuführung zu den einzelnen Planetenrädern erfolgt meistens über Planetenbolzen, an denen die Planetenräder gelagert sind. Die Planetenbolzen besitzen dazu einen Längskanal und eine oder mehrere Radialbohrungen, die das Schmieröl weiterleiten. Um einen ausreichenden Ölfluss gezielt in Richtung der Planetenbolzen zu lenken, werden häufig zusätzliche Ölfangbleche bzw. Ölfangschalen eingesetzt, die beispielsweise an Planetenträgern, vereinfachend Stege genannt, befestigt sein können.

Planetengetriebe mit solchen Ölfangblechen bzw. Ölfangschalen zeigen beispielsweise die DE 102 21 097 A1, DE 10 2007 017 138 A1 und die DE 10 2007 023 952 A1. Die EP 0 609 659 B1 offenbart eine vergleichbare Anordnung, bei der eine Ölstauscheibe an einem Planetenträger angeordnet ist.

Bei der EP 1 504 205 B1 ist eine Stirnseite eines Planetenträgers als ein Stegblech ausgebildet, das mit einem benachbarten Bauteil eines Schaltelementes, welches keine Relativdrehzahl zu dem Stegblech aufweist, eine

Schmiermittelkammer bildet, über die den benachbarten Planetenbolzen bzw. Planeten Schmieröl zugeführt wird.

Planetenradsätze können bekanntermaßen innerhalb eines Planetengetriebes miteinander gekoppelt sein, um den konstruktiven Aufwand sowie die Baugröße und das Gewicht des Getriebes möglichst gering zu halten. Insbesondere bei Stufengetrieben mit einer relativ großen Stufenanzahl ist es diesbezüglich vorteilhaft, einzelne Komponenten verschiedener Planetenradsätze miteinander zu verbinden.

Ein solches Getriebe zeigt die nicht vorveröffentlichte DE 10 2008 000 429.4 der Anmelderin. Dieses Mehrstufengetriebe weist vier Planetenradsätze auf, wobei Kopplungen von Steg zu Steg und Kopplungen von Steg zu Hohlrad verschiedener Planetenradsätze vorgesehen sind. Insbesondere können einzelne Radsätze darin zu Simpson oder Ravigneaux-Radsätzen zusammengefasst bzw. reduziert sein und als Plusgetriebe oder Minusgetriebe ausgebildet sein. Dadurch sind insgesamt neun Vorwärtsgänge und ein Rückwärtsgang mit einer besonders großen Getriebespreizung möglich.

Die gattungsgemäße DE 197 36 686 A1 zeigt eine Schmiervorrichtung für ein Planetengetriebe mit mehreren Planetenradsätzen, bei dem ein Hohlradträger, eines ersten Planetenradsatzes mit einem Planetenradträger eines benachbarten Planetenradsatzes verbunden ist.

Weiterhin ist es bekannt, bei gekoppelten Radsätzen ein Hohlrad in einen Hohlradträger einzuhängen, der seinerseits mit einem Planetenträger eines anderen Planetenradsatzes fest verbunden ist. Dadurch lässt sich insbesondere die Getriebeakustik verbessern. Nachteilig daran ist, dass über die Hohlradaufhängung Leckverluste hinsichtlich des Schmieröls auftreten können, und dass die Schmiermittelzuführung beeinträchtigt werden kann, so dass eine einwandfreie Schmierung der Planeten des mit dem Hohlradträger verbundenen Planetenträgers des anderen Planetenradsatzes nicht ohne weiteres gewährleistet ist.

Vor diesem Hintergrund liegt der Erfindung die Aufgabe zugrunde, eine Schmiervorrichtung für ein Planetengetriebe mit einer Kopplung zwischen (Weiter auf Blatt 3 der ursprünglich eingereichten Unterlagen). einem Steg eines Planetenradsatzes und einem in einem Hohlradträger eingehängten Hohlrad eines anderen Planetenradsatzes zu schaffen, die eine hinsichtlich Kosten- und Konstruktionsaufwand günstige sowie zuverlässige Schmiermittelzuführung zu den Planeten desjenigen Steges, welcher mit dem Hohlrad des anderen Planetenradsatzes gekoppelt ist, ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass in einem Planetengetriebe mit gekoppelten Radsätzen, bei dem ein Hohlrad an einem Hohlradträger angeordnet ist, aufgrund der Kopplung der betreffenden Bauteile eine Radsatzölzuführung über eine Abdichtung einer Steg-Hohlrad-Kopplung mittels eines einfachen statischen Dichtelementes realisierbar ist.

Demnach geht die Erfindung aus von einer Schmiervorrichtung für ein Planetengetriebe mit mehreren Planetenradsätzen, bei dem ein Hohlradträger, der ein Hohlrad eines ersten Planetenradsatzes trägt, mit einem Planetenträger, der mehrere Planetenräder eines benachbarten zweiten Planetenradsatzes trägt, verbunden ist, und bei der eine Schmiermittelzuführung für die Planetenräder des zweiten Planetenradsatzes vorgesehen ist. Zur Lösung der gestellten Aufgabe sieht die Erfindung vor, dass das Hohlrad gegen den Hohlradträger des ersten Planetenradsatzes und gegen den Planetenträger des zweiten Planetenradsatzes abgedichtet ist.

Durch diese Abdichtung wird vorteilhaft erreicht, dass das in den Bereich der gekoppelten Planetenradsätze, insbesondere in die Nähe des Hohlradträgers, strömende Öl gezielt den Planetenrädern zugeführt und somit quasi verlustfrei für deren Schmierung zur Verfügung gestellt werden kann. Dabei verläuft zumindest die Schmiermittelzuführung der Planetenräder des zweiten Planetenradsatzes vorzugsweise über Planetenbolzen, an denen die Planetenräder gelagert sind, wobei in dem jeweiligen Planetenbolzen ein Längskanal ausgebildet ist, von dem eine oder mehrere Radialbohrungen abgehen.

Bei einer besonders kostengünstigen Anordnung ist zwischen dem Hohlradträger und dem Hohlrad des ersten Planetenradsatzes sowie dem Planetenträger des zweiten Planetenradsatzes ein einfaches, statisch dichtendes Dichtelement eingesetzt. Demnach dichtet das statische Dichtelement den Steg gegen den mit dem Steg verbundenen Hohlradträger einerseits und den Hohlradträger gegen das in den Hohlradträger eingehängte Hohlrad andererseits ab.

Als Dichtelement kann vorzugsweise ein elastischer Runddichtring bzw. O-Ring eingesetzt werden. Das Dichtelement kann zweiseitig zwischen dem Hohlrad und dem Hohlradträger radial oder zwischen dem Hohlrad und dem Planententräger axial verpresst sein. Möglich ist auch ein Einbau des Dichtelements bzw. O-Ringes mit einer dreiseitigen Verpressung zwischen dem Planetenträger, dem Hohlrad und dem Hohlradträger. Durch den Einbau des Dichtelementes mit einer Verpressung wird eine zuverlässige und dauerhafte Abdichtung erreicht.

Zur Bildung einer geeigneten Anlagefläche für das Dichtelement und zur Führung von Schmiermittel in Richtung zu dem zweiten Planetenradsatz ist vorteilhaft an dem Hohlrad des ersten Planetenradsatzes ein axial in Richtung auf den zweiten Planetenradsatz hin zeigender Vorsprung ausgebildet. Vorzugsweise erstreckt sich der Vorsprung axial bis zu den Planetenbolzen etwa in Höhe der Längsachse der Längskanäle.

Der Hohlradträger des einen Planetenradsatzes ist mit dem Steg des anderen Planetenradsatzes vorteilhaft unlösbar fest verbunden. Die Verbindung kann beispielsweise durch Vernieten oder Verschweißen hergestellt sein. Möglich ist auch eine einstückige Ausführung von Steg und Hohlradträger, wodurch die Anzahl der Getriebebauteile reduziert wird, welches sich Kosten senkend auswirken kann.

Außerdem kann vorgesehen sein, dass das Hohlrad in dem Hohlradträger herausnehmbar eingehängt und mittels eines Sicherungselementes, beispielsweise eines Sprengringes, in dem Hohlradträger axial gesichert ist. Dadurch ist eine nachträgliche Montage bzw. Demontage des Hohlrades möglich, wodurch weitere Fertigungskosten und gegebenenfalls Servicekosten eingespart werden können.

Zur Verdeutlichung der Erfindung ist der Beschreibung eine Zeichnung von zwei Ausführungsbeispielen beigefügt. In dieser zeigt
- Fig. 1: einen Ausschnitt eines Planetengetriebes mit einer abgedichteten Steg-Hohlrad-Kopplung in einem Längsschnitt, und
- Fig. 2: einen Ausschnitt einer zweiten Ausführungsform eines Planetengetriebes mit einer abgedichteten Steg-Hohlrad-Kopplung im Längsschnitt in einem größeren Maßstab.

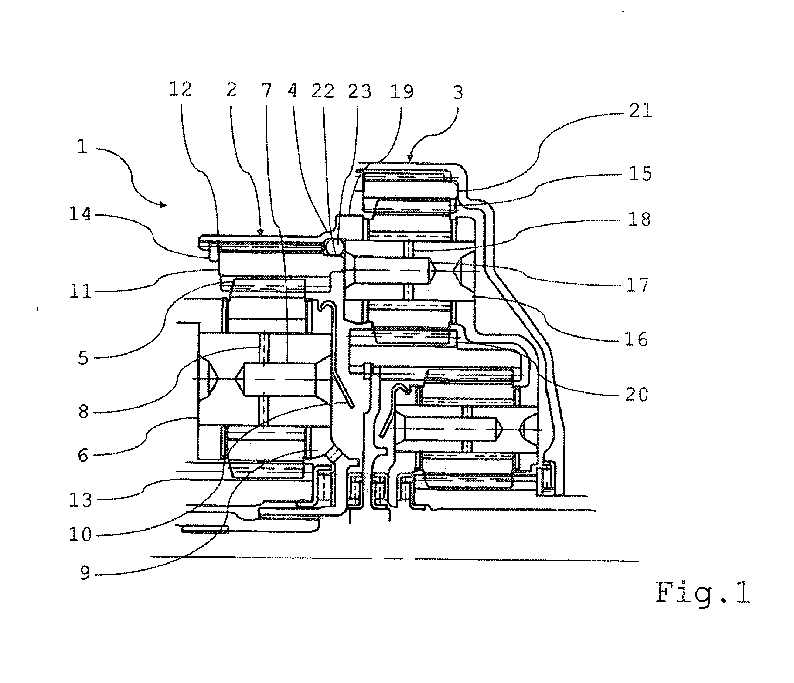

Demnach zeigt die Fig. 1 ein Automatgetriebe 1 eines Kraftfahrzeuges in Planeten bauweise mit gekoppelten Planetenradsätzen. Im dargestellten Ausriss sind drei Planetenradsätze angedeutet, von denen ein erster Planetenradsatz 2 und ein zweiter Planetenradsatz 3 erfindungsrelevant sind und im folgenden näher erläutert werden.

Der erste Planetenradsatz 2 weist mehrere baugleiche Planetenräder 5 auf, von denen eines in der Figur dargestellt ist. Die Planetenräder 5 führen eine Umlaufbewegung um ein radial inneres Sonnenrad 13 und in einem äußeren Hohlrad 11 aus. Das Hohlrad 11 ist in einen Hohlradträger 12 eingeschoben und mittels eines Sprengringes 14 axial gesichert. Die Planetenräder 5 sind auf Planetenbolzen 6 drehbar gelagert. Die Planetenbolzen 6 besitzen jeweils einen Längskanal 7, der mit Radialbohrungen 8 im Planetenbolzen 6 verbunden ist.

Die Planetenräder 5 sind von einem Planetenträger bzw. Steg 9 geführt, der die Planetenbolzen 6 trägt. An der zu den Längskanälen 7 hin offenen Stirnseite des Steges 9 ist ein angewinkeltes Ölfangblech 10 befestigt. Das Ölfangblech 10 lenkt einen Teil des durch Fliehkräfte von radial innen nach radial außen strömenden Schmieröls, welches über eine nicht dargestellte zentrale Hydraulikversorgung bereitgestellt wird, in die Längskanäle 7 der Planetenbolzen 6. Über die Radialbohrungen 8 in den Planetenbolzen 6 wird dem Radsatz 2 bzw. den Planetenrädern 5 entsprechend Schmier- und Kühlöl zugeführt.

Ein anderer Teil des Schmieröls strömt weiter nach radial außen in den Bereich des zweiten Planetenradsatzes 3, der auf einem größeren Durchmesser angeordnet ist. Der zweite Planetenradsatz 3 weist wiederum mehrere Planetenräder 15 auf, die auf Planetenbolzen 16 mit einem Längskanal 17 und Radialbohrungen 18 gelagert sowie von einem Steg 19 geführt sind. Die Planetenräder 15 kämmen zudem mit einem Sonnenrad 20 und einem Hohlrad 21.

Der Steg 19 des zweiten Planetenradsatzes 3 ist stirnseitig mit dem Hohlradträger 12 des ersten Planetenradsatzes 2 einstückig verbunden und bildet mit diesem eine Steg-Hohlrad-Kopplung. Zwischen einem an dem Hohlrad 11 des ersten Planetenradsatzes 2 ausgebildeten axialen Vorsprung 22, und einem Verbindungsabschnitt 4 von Hohlradträger 12 und Steg 19 ist, radial oberhalb der Längskanäle 17 der Planetenbolzen 16 des zweiten Planetenradsatzes 3, erfindungsgemäß ein als O-Ring ausgebildetes Dichtelement 23 eingebracht. Dieser O-Ring 23 ist mit einer Radialverpressung zwischen dem Hohlrad 11 und dem Hohlradträger 12 eingebaut.

In den Bereich des zweiten Planetenradsatzes 3 strömendes Schmier- und Kühlöl wird an dem Axialvorsprung 22 des Hohlrades 11 in Richtung der Längskanäle 17 der Planetenräder 15 des zweiten Planetenradsatzes 3 umgelenkt. Der O-Ring 23 vermeidet dabei einen Ölverlust in Richtung zu dem Hohlradträger 12 und fungiert somit als Schmiermittelzuführung bzw. Radsatzölzuführung zu den Planetenrädern 15 des mit dem ersten Planetenradsatz 2 gekoppelten zweiten Planetenradsatzes 3.

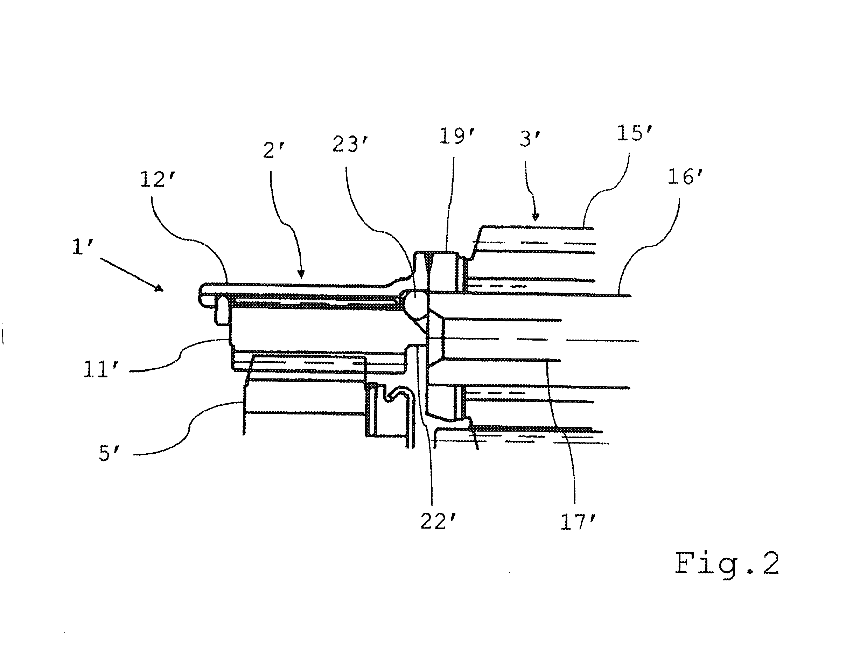

Fig. 2 zeigt eine zweite Ausführungsform eines Automatgetriebes 1' mit zwei gekoppelten Planetenradsätzen 2' und 3'. Die Getriebeanordnung entspricht weitgehend derjenigen der Fig. 1. Die Darstellung beschränkt sich daher auf einen kleineren relevanten Bereich des Automatgetriebes 1. Demnach ist in einem Hohlradträger 12' des ersten Planetenradsatzes 2' ein Hohlrad 11' eingehängt, an welchem zugeordnete Planetenräder 5' umlaufen. Der Hohlradträger 12' ist zur Bildung einer Steg-Hohlrad-Kopplung stirnseitig mit einem Steg 19' des zweiten Planetenradsatzes 3' durch eine Schweißnaht fest verbunden. Die Planetenräder 15' des zweiten Planetenradsatzes 3' sind auf Planetenbolzen 16' mit einem Längskanal 17' und einer oder mehreren (nicht dargestellten) Radialbohrungen für eine Schmiermittelzuführung gelagert.

An dem Hohlrad 11' steht ein abgeschrägter axialer Vorsprung 22' in Richtung zu dem zweiten Planetenradsatz 3' hervor. Ein O-Ring 23' ist als Dichtelement zwischen dem Hohlrad 11' bzw. dessen Axialvorsprung 22', dem Hohlradträger 12' und dem Steg 19' mit Verpressung desselben eingebaut, so dass wiederum mit radialer Abdichtung eine Radsatzölzuführung zu den Planeten 15' des zweiten Planetenradsatzes 3' ausgebildet ist.

### Bezugszeichenliste

- 1, 1': Automatgetriebe
- 2, 2': Planetenradsatz
- 3, 3': Planetenradsatz
- 4: Verbindungsstück
- 5, 5': Planetenrad
- 6: Planetenbolzen
- 7: Längskanal
- 8: Radialbohrung
- 9: Planetenträger, Steg
- 10: Ölfangblech
- 11,11': Hohlrad
- 12, 12': Hohlradträger
- 13: Sonnenrad
- 14: Sicherungselement, Sprengring
- 15, 15': Planetenrad
- 16, 16': Planetenbolzen
- 17, 17': Längskanal
- 18: Radialbohrung
- 19, 19': Planetenträger, Steg
- 20: Sonnenrad
- 21: Hohlrad
- 22, 22': Vorsprung
- 23, 23': Dichtelement, O-Ring

## Patentansprüche

1. Schmiervorrichtung für ein Planetengetriebe mit mehreren Planetenradsätzen (2, 3; 2', 3'), bei dem ein Hohlradträger (12, 12'), der ein Hohlrad (11, 11') eines ersten Planetenradsatzes (2, 2') trägt, mit einem Planetenträger (19, 19'), der mehrere Planetenräder (15, 15') eines benachbarten zweiten Planetenradsatzes (3, 3') trägt, verbunden ist, und bei der eine Schmiermittelzuführung für die Planetenräder (15, 15') des zweiten Planetenradsatzes (3, 3') vorgesehen ist, **dadurch gekennzeichnet, dass** das Hohlrad (11, 11') des ersten Planetenradsatzes (2, 2') gegen den Hohlradträger (12, 12') des ersten Planetenradsatzes (2, 2') und gegen den Planetenträger (19, 19') des zweiten Planetenradsatzes (3, 3') abgedichtet ist.

2. Schmiervorrichtung nach Anspruch 1, **dadurch gekennzeichnet, dass** zwischen dem Hohlradträger (12, 12') und dem Hohlrad (11, 11') des ersten Planetenradsatzes (2, 2') sowie dem Planetenträger (19, 19') des zweiten Planetenradsatzes (3, 3') ein statisch dichtendes Dichtelement (23, 23') eingesetzt ist.

3. Schmiervorrichtung nach Anspruch 1 oder 2, **dadurch gekennzeichnet, dass** die Schmiermittelzuführung der Planetenräder (15, 15') des zweiten Planetenradsatzes (3, 3') über Planetenbolzen (16, 16'), an denen die Planetenräder (15, 15') gelagert sind, verläuft, wobei in dem jeweiligen Planetenbolzen (16, 16') ein Längskanal (17, 17') ausgebildet ist, von dem zumindest eine Radialbohrung (18) abgeht.

4. Schmiervorrichtung nach einem der Ansprüche 1 bis 3, **dadurch gekennzeichnet, dass** das Dichtelement (23, 23') aus einem Elastomer oder einem elastomer-ähnlichen Material hergestellt ist.

5. Schmiervorrichtung nach Anspruch 4, **dadurch gekennzeichnet, dass** das Dichtelement (23, 23') als ein O-Ring ausgebildet ist.

6. Schmiervorrichtung nach einem der Ansprüche 1 bis 5, **dadurch gekennzeichnet, dass** das Dichtelement (23) zwischen dem Hohlrad (11) und dem Hohlradträger (12) radial verpresst ist.

7. Schmiervorrichtung nach einem der Ansprüche 1 bis 5, **dadurch gekennzeichnet, dass** das Dichtelement zwischen dem Hohlrad und dem Planentenradträger axial verpresst ist.

8. Schmiervorrichtung nach einem der Ansprüche 1 bis 5, **dadurch gekennzeichnet, dass** das Dichtelement (23') zwischen dem Planetenträger (19'), dem Hohlrad (11') und dem Hohlradträger (12') verpresst ist.

9. Schmiervorrichtung nach einem der Ansprüche 1 bis 8, **dadurch gekennzeichnet, dass** das Hohlrad (11, 11') in dem Hohlradträger (12, 12') herausnehmbar eingehängt oder eingeschoben ist.

10. Schmiervorrichtung nach Anspruch 9, **dadurch gekennzeichnet, dass** das Hohlrad (11, 11') mittels eines Sicherungselementes (14) in dem Hohlradträger (12, 12') axial gesichert ist.

11. Schmiervorrichtung nach einem der Ansprüche 1 bis 10, **dadurch gekennzeichnet, dass** der Hohlradträger (12') mit dem Planetenträger (19') unlösbar vernietet oder verschweißt ist.

12. Schmiervorrichtung nach einem der Ansprüche 1 bis 10, **dadurch gekennzeichnet, dass** der Hohlradträger (12) mit dem Planetenträger (19) einstückig verbunden ist.

13. Schmiervorrichtung nach einem der Ansprüche 1 bis 12, **dadurch gekennzeichnet, dass** zur Bildung einer Anlagefläche für das Dichtelement (23, 23') und zur Führung von Schmiermittel zu dem zweiten Planetenradsatz (3, 3') an dem Hohlrad (11, 11') des ersten Planetenradsatzes (2, 2') ein axial in Richtung auf den zweiten Planetenradsatz (3, 3') hin zeigender Vorsprung (22, 22') ausgebildet ist.

## Claims

1. Lubricating apparatus for a planetary gear mechanism having a plurality of planetary gear sets (2, 3; 2', 3'), in which planetary gear mechanism an internal-gear carrier (12, 12') which carries an internal gear (11, 11') of a first planetary gear set (2, 2') is connected to a planetary carrier (19, 19') which carries a plurality of planetary gears (15, 15') of an adjacent second planetary gear set (3, 3'), and in which lubricating apparatus a lubricant feed is provided for the planetary gears (15, 15') of the second planetary gear set (3, 3'), **characterized in that** the internal gear (11, 11') of the first planetary gear set (2, 2') is sealed against the internal-gear carrier (12, 12') of the first planetary gear set (2, 2') and against the planetary carrier (19, 19') of the second planetary gear set (3, 3').

2. Lubricating apparatus according to Claim 1, **characterized in that** a statically sealing seal element (23, 23') is inserted between the internal-gear carrier (12, 12') and the internal gear (11, 11') of the first planetary gear set (2, 2') and the planetary carrier (19, 19') of the second planetary gear set (3, 3').

3. Lubricating apparatus according to Claim 1 or 2, **characterized in that** the lubricant feed of the planetary gears (15, 15') of the second planetary gear set (3, 3') runs via planet journals (16, 16'), on which the planetary gears (15, 15') are mounted, a longitudinal channel (17, 17') being formed in the respective planet journal (16, 16'), from which longitudinal channel (17, 17') at least one radial bore (18) branches off.

4. Lubricating apparatus according to one of Claims 1 to 3, **characterized in that** the seal element (23, 23') is produced from an elastomer or a material which is similar to elastomer.

5. Lubricating apparatus according to Claim 4, **characterized in that** the seal element (23, 23') is configured as an 0-ring.

6. Lubricating apparatus according to one of Claims 1 to 5, **characterized in that** the seal element (23) is press-fitted radially between the internal gear (11) and the internal-gear carrier (12).

7. Lubricating apparatus according to one of Claims 1 to 5, **characterized in that** the seal element is press-fitted axially between the internal gear and the planetary-gear carrier.

8. Lubricating apparatus according to one of Claims 1 to 5, **characterized in that** the seal element (23') is press-fitted between the planetary carrier (19'), the internal gear (11') and the internal-gear carrier (12').

9. Lubricating apparatus according to one of Claims 1 to 8, **characterized in that** the internal gear (11, 11') is hooked in or pushed in removably in the internal-gear carrier (12, 12').

10. Lubricating apparatus according to Claim 9, **characterized in that** the internal gear (11, 11') is secured axially in the internal-gear carrier (12, 12') by means of a securing element (14).

11. Lubricating apparatus according to one of Claims 1 to 10, **characterized in that** the internal-gear carrier (12') is riveted or welded non-releasably to the planetary carrier (19').

12. Lubricating apparatus according to one of Claims 1 to 10, **characterized in that** the internal-gear carrier (12) is connected integrally to the planetary carrier (19).

13. Lubricating apparatus according to one of Claims 1 to 12, **characterized in that** a projection (22, 22') which points axially in the direction of the second planetary gear set (3, 3') is formed on the internal gear (11, 11') of the first planetary gear set (2, 2') in order to form a bearing face for the seal element (23, 23') and in order to guide lubricant to the second planetary gear set (3, 3').

## Revendications

1. Dispositif de lubrification pour transmission planétaire comprenant plusieurs trains planétaires (2, 3 ; 2', 3'), un support de couronne dentée (12, 12'), qui porte une couronne dentée (11, 11') d'un premier train planétaire (2, 2'), étant connecté à un porte-satellites (19, 19') qui porte plusieurs satellites (15, 15') d'un deuxième train planétaire adjacent (3, 3'), et une alimentation en lubrifiant pour les satellites (15, 15') du deuxième train planétaire (3, 3') étant prévue, **caractérisé en ce que** la couronne dentée (11, 11') du premier train planétaire (2, 2') est étanchéifiée par rapport au support de couronne dentée (12, 12') du premier train planétaire (2, 2') et par rapport au porte-satellites (19, 19') du deuxième train planétaire (3, 3').

2. Dispositif de lubrification selon la revendication 1, **caractérisé en ce qu'**entre le support de couronne dentée (12, 12') et la couronne dentée (11, 11') du premier train planétaire (2, 2') et le porte-satellites (19, 19') du deuxième train planétaire (3, 3') est inséré un élément d'étanchéité (23, 23') réalisant une étanchéité statique.

3. Dispositif de lubrification selon la revendication 1 ou 2, **caractérisé en ce que** l'alimentation en lubrifiant des satellites (15, 15') du deuxième train planétaire (3, 3') s'effectue par le biais d'axes de satellites (16, 16') sur lesquels sont supportés les satellites (15, 15'), un canal longitudinal (17, 17') étant réalisé dans l'axe de satellite respectif (16, 16'), depuis lequel canal longitudinal part au moins un alésage radial (18).

4. Dispositif de lubrification selon l'une quelconque des revendications 1 à 3, **caractérisé en ce que** l'élément d'étanchéité (23, 23') est fabriqué en un élastomère ou un matériau similaire à un élastomère.

5. Dispositif de lubrification selon la revendication 4, **caractérisé en ce que** l'élément d'étanchéité (23, 23') est réalisé sous forme de joint torique.

6. Dispositif de lubrification selon l'une quelconque des revendications 1 à 5, **caractérisé en ce que** l'élément d'étanchéité (23) est pressé radialement entre la couronne dentée (11) et le support de couronne dentée (12).

7. Dispositif de lubrification selon l'une quelconque des revendications 1 à 5, **caractérisé en ce que** l'élément d'étanchéité est pressé axialement entre la couronne dentée et le porte-satellites.

8. Dispositif de lubrification selon l'une quelconque des revendications 1 à 5, **caractérisé en ce que** l'élément d'étanchéité (23') est pressé entre le porte-satellitess (19'), la couronne dentée (11') et le support de couronne dentée (12').

9. Dispositif de lubrification selon l'une quelconque des revendications 1 à 8, **caractérisé en ce que** la couronne dentée (11, 11') est accrochée ou enfoncée dans le support de couronne dentée (12, 12') de manière à pouvoir être enlevée.

10. Dispositif de lubrification selon la revendication 9, **caractérisé en ce que** la couronne dentée (11, 11') est fixée axialement au moyen d'un élément de fixation (14) dans le support de couronne dentée (12, 12').

11. Dispositif de lubrification selon l'une quelconque des revendications 1 à 10, **caractérisé en ce que** le support de couronne dentée (12') est riveté ou soudé de manière permanente au porte-satellites (19').

12. Dispositif de lubrification selon l'une quelconque des revendications 1 à 10, **caractérisé en ce que** le support de couronne dentée (12) est connecté d'une seule pièce au porte-satellites (19).

13. Dispositif de lubrification selon l'une quelconque des revendications 1 à 12, **caractérisé en ce que** pour la formation d'une surface d'appui pour l'élément d'étanchéité (23, 23') et pour le guidage de lubrifiant jusqu'au deuxième train planétaire (3, 3'), une saillie (22, 22') orientée axialement dans la direction du deuxième train planétaire (3, 3') est réalisée au niveau de la couronne dentée (11, 11') du premier train planétaire (2, 2').
